# EUROPEAN PATENT APPLICATION

(11) **EP 4 261 184 A2**
(43) Date of publication of application: **18.10.2023**
(21) Application number: 23167652.9
(22) Date of filing: 13.04.2023
(51) Int. Cl.: C01B 3/38, C01B 3/48

(54) **COMBINED FUEL CELL AND DIGESTION SYSTEM AND METHOD OF OPERATING THEREOF**

(30) Priority: 15.04.2022 US 202263363040 P
(71) Applicant: Bloom Energy Corporation, San Jose, CA 95134 (US)
(72) Inventor: WEINGAERTNER, David, San Jose, 95134 (US)
(74) Representative: Wichmann, Hendrik

(57) **Abstract**

A system includes a digestion system configured to convert a digestate into a fuel gas, and a fuel cell power system configured to convert the fuel gas into power and heat, and to provide the heat to the digestion system.

## Description

### FIELD

Aspects of the present invention relate to power generation systems in general and to integrated fuel cell and digestion systems in particular.

### BACKGROUND

There is a great need to destroy a wide range of waste streams generated around the world and at the same time to convert this carbonaceous waste into useful hydrogen-rich syngas to accomplish one or more of the following: (1) production of renewable H₂ fuel, (2) to feed an exothermic hydrocarbon synthesis reactor, such as a Fischer-Tropsch module, to produce renewable fuels, or (3) to use a portion of this syngas to drive a fuel cell to power the plant.

Steam/CO₂ reforming is often confused with gasification technology. While both processes require heat to drive the endothermic chemistry, the source of that heat is significantly different with considerably different results. An important difference is that gasification uses combustion, while steam/CO₂ reforming does not. In gasification, combustion of part of the feedstock produces heat, which has several implications for efficiency, quality, process cleanliness and maintenance. Combusting part of the feedstock makes CO₂, which dilutes the resultant syngas by reducing the amount of H₂ that is produced. That combustion also consumes part of the syngas further reducing the quantity H2. In most cases, this combustion is driven by adding air, further diluting the H₂ by the presence of nitrogen.

In contrast to gasification, the steam/CO₂-reforming chemistry used in a steam/CO₂ reformer (SR) does not involve combustion, does not utilize oxygen, and does not require the addition of air to the system. The idealized main chemical reaction, which can be considered to be chemical reduction, combines hydrocarbon, CO₂, H₂O and heat to product CO and H₂. However, numerous other reactions also occur during the reforming process. In particular, when waste streams are steam reformed to generate syngas, a plethora of products apart from the desired hydrocarbons are produced. Sulfur- and halogen-containing products are typically considered contaminants, and can damage the electrochemical catalysts of high temperature fuel cells driven by syngas.

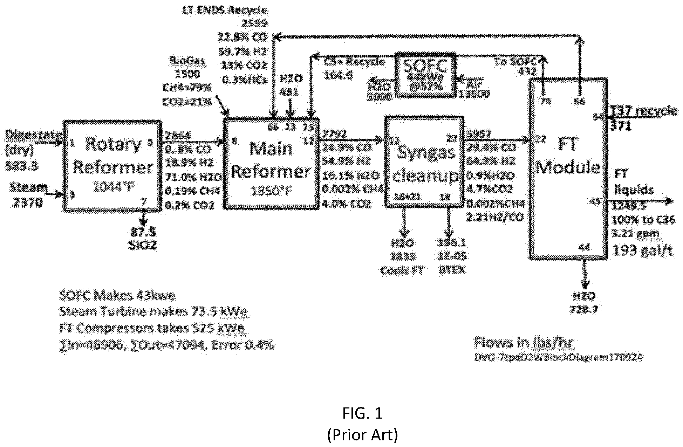

U.S. Pat. App. No. 222/0017826, which is incorporated herein by reference in its entirety, discloses the production of hydrogen and Fischer Tropsch (FT) gases by steam/CO₂ reforming. FIG. 1 depicts a process flow diagram for feeding 80% moisture digestate as received (FIG. 1 references the flow rate in lbs/hr in terms of the dry weight of the moist digestate). Then, a full 1500 lbs/hr of biogas was added, the main SR produced 54.9% H₂. And when the water of condensation was removed the H₂ level increased to 64.9% H. The scheme shows the process layout to be feasible as well as for FT. It is helpful to utilize a 525 kWe compressor operating costs because of the much larger flows resulting from the added water. Lower moisture reduces the power demand.

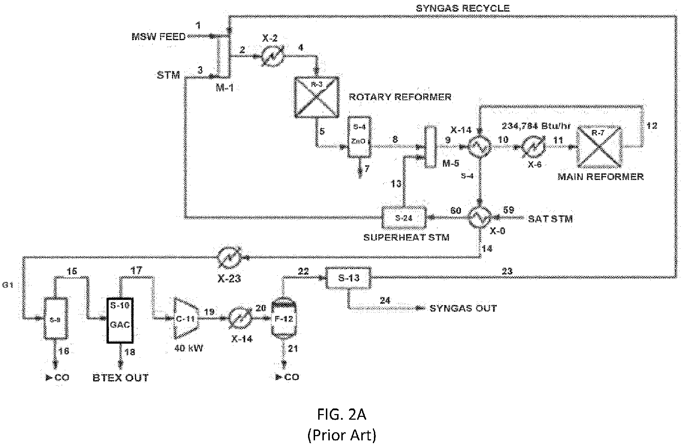

In preparation for running the 1/10th scale pilot unit on MSW, a D2W process simulation was completed to provide estimates of the key process streams and operating conditions (see FIG. 2A).

The feedstock to be shredded to minus 1/4" size and fed at 8.33 lb/hr. The feedstock contains moisture level of 2.38 pounds per hour of water, 17% inorganics such as glass and metal, 2% PVC plastic containing chlorine and 8.1% ammonia with the main SR reactor. R-7, to be run at 1500.degree. F. The recycle flow is to be 27.4 pounds per hour. According to the D2W simulation, the main reactor will produce 25.7% carbon monoxide, 54.4% hydrogen, 11.3% water, 1.34% CH₄, 6.87% CO2, 0.32% NH₃, and 0.075% HCl. At 1500 °F. and 1600 °F.; the maximum H₂ observed=64%; however, the most recent runs after 44-2 were run at 50% H₂.

The H₂/CO ratio for FT averaged over the last four GC tests was 2.11.+-.0.5. The water condensate would contain 3.1% NH₃ and 0.725% HCl; so is nearly neutralized. The main reactor endothermic heat required for the chemistry would be 4.3 kW or about 52% of reactor capacity and the rotary reformer requires 8.75 kW but 23.6 kW was recoverable in the four heat recovery heat exchangers. Also, if there is a SOFC added, its heat can provide up to 79 kWt. The recycle blower only requires 0.6 kWe. So, the steam reforming front end of the overall process balances with only the 4.3 kW needed for the main reactor and 0.6 kW for the blower.

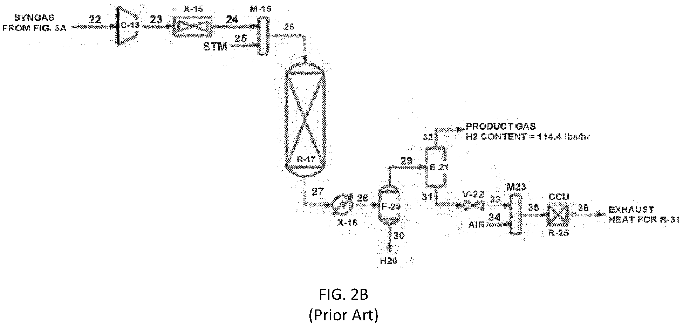

FIG. 2B shows the second portion of the plant making only H₂. Key to this process configuration is the operation of the PSA, S-21, followed by the WGS unit, R-17. The PSA can tolerate 5% CO, so the amount of steam added to the WGS unit must be high enough to drop the CO below 5%. The PSA typically can achieve 85% H₂ recovery. The PSA tail gas is high enough in H₂ and CO to get high level performance or the tail gas can be used for making heat in the CCU, R-25.

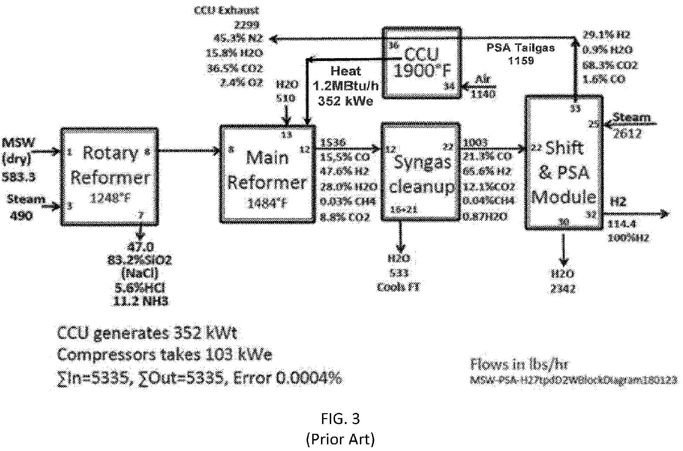

FIG. 3 shows the details of how all of these process blocks fit together to serve the needs of the PSA for purifying the H₂ as well as the large heat recovered using the PSA tail gas in the catalytic converter.

At commercial scale, e.g., 7 tons per day (tpd), the MSW feedstock is to be shredded to less than 2" size and fed at 583 lb/hr. The feedstock would typically contain a moisture level of about 2.38 pounds per hour of water, 17% inorganics such as glass and metal, 2% PVC plastic containing chlorine and 8.1% ammonia and main reactor to be run at about 1500 °F. (1484 °F. in FIG. 3). The recycle flow is 1165 pounds per hour. At commercial scale, all of the flow stream compositions would be similar as discussed above. The main reactor endothermic heat required for the chemistry was 300 kW maximum that is about 52% of reactor capacity and the rotary reformer required 300 kW but 634 kW was recoverable in the four heat recovery heat exchangers. The recycle blower only required 40 kW. The overall steam reformer front end commercial process only needs 300 kW to operate. This energy would be supplied by the highly exothermic FT or PSA making H₂.

These process simulation results confirmed results of another project for demonstrating on this very same equipment reformation of medical waste that contained plastic, organics, paper, etc. in hand-cut size (not shredded). That project did produce the 55% hydrogen level that is nearly identical to the present process simulation. In some embodiments this process as described above can be scaled up to 7 tons/day for processing garbage that will be shredded and automatically sorted by infrared to retrieve valuable numbered plastics.

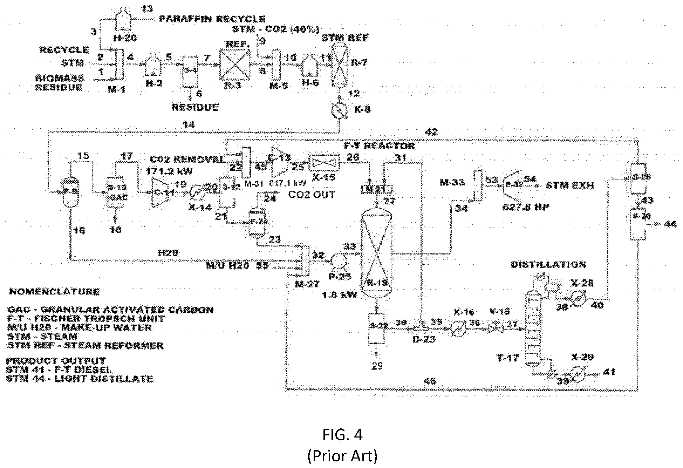

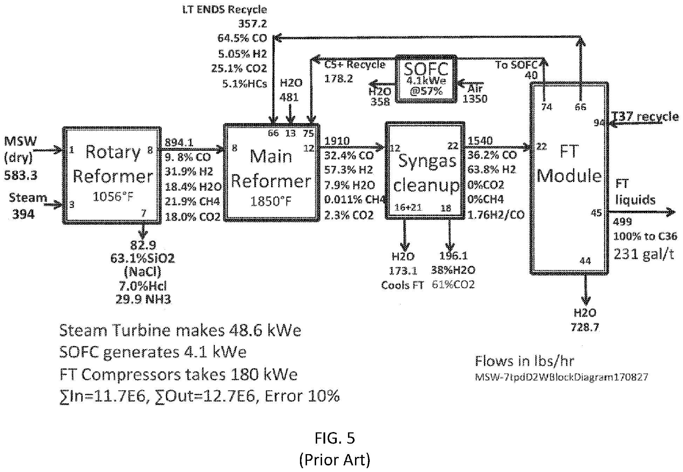

The diagram in FIG. 5 simplifies the detailed flow diagram in FIG. 4 showing there is produced FT liquids at a rate 231.4 gal/dry ton of MSW feed. The MSW is shown as the dry basis plus any water that is present in the analysis of the MSW which has a substantial water content, like 40%, as shown with water content as steam of 394 lbs/hr. Out of the bottom of the rotary reformer come the inorganic solids such as glass and soil (as SiO₂), metal, chlorine as HCl and ammonia equivalent. The syngas leaves the rotary reformer operating at 1056 °F, as 894.1 lbs/hr of syngas as stream 8 and serves as feed to the main reformer operating at

1850 °F. Also, added to the main reformer are the light ends from the FT module as a recycle stream and also the C5+ recycle components as well as superheated steam at 481 lbs/hr. This steam is internally generated since the whole flow diagram process has an excess of water around 777 lbs/hr or 1.55 gpm. The solid oxide fuel cell (SOFC) accepts CO whereas the common PEM fuels cells do not since the CO is a poison to its catalyst. The SOFC makes excellent quality water electrochemically that is very similar to distilled water.

As shown in the "Syngas Cleanup" module of FIG. 5, the water is condensed, and a portion used to cool the highly exothermic FT Module. So the final cleaned syngas is rich in H2 (63.8%) and in CO (36.2%) but low in CH₄ and CO₂ that are functional, though not ideal, for use in FT synthesis chemistry. The H₂/CO ratio is 1.76, which is a little lower than the preferred ratio of 2.16.

The FT module involves the FT synthesis of the FT liquids products, including naphtha, jet-A, diesel and some paraffin wax. Naphtha and wax (if produced) also can be recycled as shown back to the main reformer for reuse in the process. Also, any overhead gases (i.e. a small 138 lbs/hr) from 37 tray distillation tower, T-37, to separate the products, are used as well as a feed stream to the FT module. The yield is 231 gal/dry ton of feed, as compared to the FT process simulations done before that make about 125 gal/dry ton. It is helpful to be able to make good use of the two recycle streams.

The powerful advantage is that these two process configurations can be combined so that a mix of H₂ and FT liquids can be made the relative portions changed to suit the marketplace. The economics for such a 7 tpd plant has a superb payback of 9 years selling renewable H₂ at $10/kg, saving the current tipping fee of $100/ton, and FT liquids at below market prices.

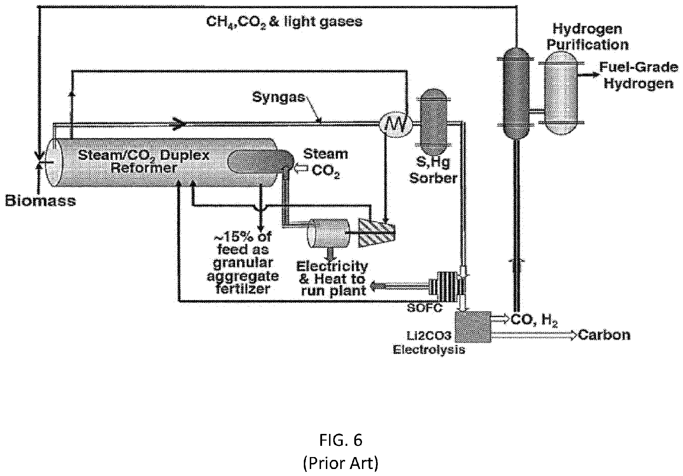

FIG. 6 shows another embodiment that combines apparatus and methods discussed herein. This system shows a duplex rotary reformer, a low BTU gas turbine handling syngas, a solid oxide fuel cell, and an electrolyzer making carbon or carbon products that sequester the carbon. This system achieves zero carbon production.

Fuel cells, such as solid oxide fuel cells, are electrochemical devices which can convert energy stored in fuels to electrical energy with high efficiencies. High temperature fuel cells include solid oxide and molten carbonate fuel cells. These fuel cells may operate using hydrogen and/or hydrocarbon fuels. There are classes of fuel cells, such as the solid oxide regenerative fuel cells, that also allow reversed operation, such that oxidized fuel can be reduced back to unoxidized fuel using electrical energy as an input.

### SUMMARY

According to various embodiments, a system includes a digestion system configured to convert a digestate into a fuel gas, and a fuel cell power system configured to convert the fuel gas into power and heat, and to provide the heat to the digestion system.

According to various embodiments, a method includes converting a digestate into a fuel gas, providing the digestate to a fuel cell power system, converting the fuel gas into power and heat in the fuel cell power system, and providing the heat from the fuel cell power system to the digestion system.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1 is a prior art wet dairy digestate+biogas process flow diagram.
FIG. 2A is a schematic view of a prior art scaled-up 7 tons/day municipal solid waste (MSW)/medical waste (MedWaste) plant.
FIG. 2B is a schematic view of a second portion of the plant of FIG. 2A.
FIG. 3 is a flow diagram for prior art MSW with catalytic converter heat recovery.
FIG. 4 is a schematic view of a prior art scaled-up 7 tons/day MSW/MedWaste plant.
FIG. 5 is a flow diagram for a prior art 7 tons/day MSW to FT liquids with SOFC fuel cell heat recovery.
FIG. 6, a schematic representation of a prior art steam and carbon dioxide reforming system.
FIG. 7 is a schematic of a fuel cell power module configured to utilize hydrogen fuel, according to various embodiments of the present disclosure.
FIG. 8 is a simplified schematic view of a fuel cell power system including power modules of FIG. 7, according to various embodiments of the present disclosure.
FIG. 9 is a schematic of a fuel cell power module configured to utilize a hydrocarbon fuel, according to various embodiments of the present disclosure.
FIG. 10 is a schematic of a power system including multiple power modules of FIG. 9, according to various embodiments of the present disclosure.
FIG. 11 is a schematic of an integrated system, according to various embodiments of the present disclosure.
FIG. 12 is a schematic of an integrated system, according to various embodiments of the present disclosure.

### DETAILED DESCRIPTION

As set forth herein, various aspects of the disclosure are described with reference to the exemplary embodiments and/or the accompanying drawings in which exemplary embodiments of the invention are illustrated. This invention may, however, be embodied in many different forms and should not be construed as limited to the exemplary embodiments shown in the drawings or described herein. It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

Fuel cell systems, such as solid oxide fuel cell (SOFC) systems, may be operated using hydrogen or by reforming a hydrocarbon fuel, such as propane or natural gas, or may be operated using hydrogen gas. SOFC systems that operate using hydrogen gas may have a relatively simplified structure, since fuel reformation is not required, and may be operated at a very high efficiency, by recycling anode exhaust. In particular, hydrogen-fueled SOFC systems may have fuel utilization efficiencies of 95% or more.

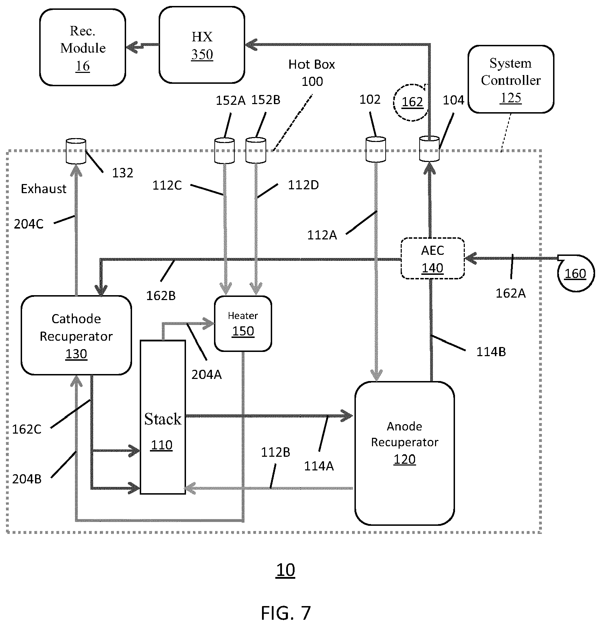

FIG. 7 is a schematic representation of a SOFC system power module 10 configured to operate using hydrogen gas (H₂), according to various embodiments of the present disclosure. Referring to FIG. 7, the power module 10 includes a hotbox 100 and various components disposed therein or adjacent thereto. The hot box 100 may contain stacks 110 of fuel cells, such as solid oxide fuel cells, separated by interconnects. Solid oxide fuel cells of the stack 110 may contain a ceramic electrolyte, such as yttria stabilized zirconia (YSZ), scandia stabilized zirconia (SSZ), scandia and ceria stabilized zirconia or scandia, yttria and ceria stabilized zirconia, an anode electrode, such as a nickel-YSZ, a nickel-SSZ or nickel-doped ceria cermet, and a cathode electrode, such as lanthanum strontium manganite (LSM). The interconnects may be metal alloy interconnects, such as chromium-iron alloy interconnects. The stacks 110 may be internally or externally manifolded for fuel.

The module 10 may also contain an anode recuperator 120 heat exchanger, a cathode recuperator 130 heat exchanger, and a startup heater 150. In some embodiments, the power module 10 may optionally include an anode exhaust cooler 140 and/or a recycle blower 162. The module 10 may also include a main air blower 160 (e.g., system blower), which may be disposed outside of the hotbox 100. However, the present disclosure is not limited to any particular location for each of the module components with respect to the hotbox 100.

The anode recuperator 120 receives fuel (e.g., H₂) from a main fuel inlet 102 of the hotbox 100 through fuel conduit 112A. The fuel is heated in the anode recuperator 120 by fuel exhaust (e.g., anode exhaust) output from the stack 110, before being provided to the stack 110 by fuel conduit 112B. The startup heater 150 may receive fuel provided to an ignition fuel inlet 152A and/or a heating fuel inlet 152B of the hotbox 100, through respective fuel conduits 112C and 112D. The startup heater 150 may also receive air exhaust (i.e., cathode exhaust) output from the stack through an exhaust conduit 204A. Exhaust output from the startup heater 150 may be provided to the cathode recuperator 130 through exhaust conduit 204B. Exhaust output from the cathode recuperator 130 may be exhausted from the hotbox 100 through exhaust conduit 204C.

The main air blower 160 may be configured to provide air (e.g., an air inlet stream) to the anode exhaust cooler 140 through air conduit 162A. Air flows from the anode exhaust cooler 140 to the cathode recuperator 130 through air conduit 162B. The air is heated in the cathode recuperator 130 by the air exhaust output from the stack 110 (or by oxidized fuel heater 150 exhaust output if the fuel is also provided to the heater 150, where the fuel is oxidized by the air exhaust to form the oxidized fuel heater exhaust output). The heated air flows from the cathode recuperator 130 to the stack 110 through air conduit 162C.

Fuel exhaust (e.g., an anode exhaust stream generated in the stack 110) is provided to the anode recuperator 120 through fuel exhaust conduit 114A. The fuel exhaust may contain unreacted hydrogen fuel and water. Fuel exhaust output from the anode recuperator 120 may be provided to a fuel exhaust outlet 104 of the hotbox 100, by fuel exhaust conduit 114B. In some embodiments, the optional anode exhaust cooler 140 may be configured to cool the fuel exhaust flowing through the fuel exhaust conduit 114B by the inlet air stream from the air conduit 162A, prior to the fuel exhaust reaching the fuel exhaust outlet 104.

The power module 10 may further comprise a system controller 125 configured to control various elements of the module 10. The controller 125 may include a central processing unit configured to execute stored instructions. For example, the controller 125 may be configured to control fuel and/or air flow through the power module 10.

In some embodiments, the fuel cell stacks 110 may be arranged in the hotbox 100 around a central column including the anode recuperator 120, the startup heater 150, and the optional anode exhaust cooler 140. In particular, the anode recuperator 120 may be disposed radially inward of the startup heater 150, and the anode exhaust cooler 140 may be mounted over the anode recuperator 120 and the startup heater 150.

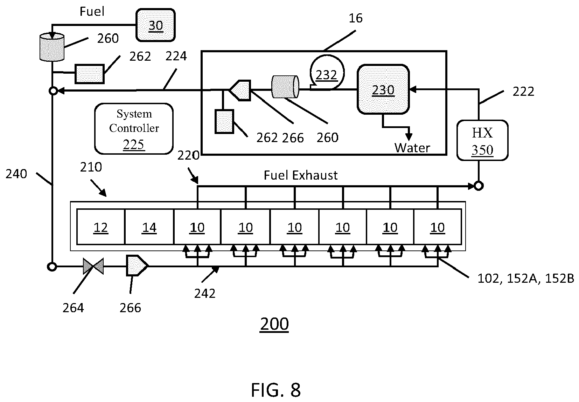

FIG. 8 is a simplified schematic view of a fuel cell power system 200 including power modules 10 of FIG. 7, according to various embodiments of the present disclosure.

Referring to FIGS. 7 and 8, the power system 200 may include at least one module system enclosure 210 including multiple power modules 10. For example, as shown in FIG. 8, the power modules 10 may be arranged in one or more rows in the system enclosure 210. However, the present disclosure is not limited to any particular number of power modules 10 and/or system enclosures 210.

The system enclosure 210 may also include a power conditioning module 12 and an optional fuel processing module 14. The power conditioning modules 12 may including components for converting the fuel cell generated DC power to AC power (e.g., DC/AC inverters and optionally DC/DC converters described in U.S. Patent Number 7,705,490, incorporated herein by reference in its entirety), electrical connectors for AC power output to the grid, circuits for managing electrical transients, a system controller (e.g., a computer or dedicated control logic device or circuit). The power conditioning module 12 may be designed to convert DC power from the fuel cell modules to different AC voltages and frequencies. Designs for 200V, 60Hz; 480V, 60Hz; 415V, 50Hz and other common voltages and frequencies may be provided.

The fuel processing module 14 may include fuel processing components, such as desulfurization beds or the like, for purifying hydrocarbon fuels. The fuel processing module 14 may include fuel flow control and detection elements, such as flow meters, flow regulators, etc. When hydrogen is supplied to the system enclosure 210, desulfurization beds may be omitted from the fuel processing module 14. In the alternative, the fuel processing module 14 may be omitted or utilized for other system components.

The power system 200 may include a main recycling conduit (e.g., main recycling manifold) 220, a first recycling conduit 222, a second recycling conduit 224, a condenser 230, a recycle blower 232, a first fuel supply conduit 240, and a second fuel supply conduit (e.g., fuel supply manifold) 242. The main recycling conduit 220 may fluidly connect the fuel exhaust outlets 104 of each power module 10 to the first recycling conduit 222. The first recycling conduit 222 may be fluidly connect the main recycling conduit 220 to an inlet of the condenser 230. The second recycling conduit 224 may fluidly connect an outlet of the condenser 230 to the fuel supply conduit 240.

The second fuel supply conduit 242 may fluidly connect the fuel supply conduit 240 to the fuel inlets 102, 152A, 152B of each power module 10. The main recycling conduit 220 and the first recycling conduit 222 may be configured to provide fuel exhaust output from the power modules 10 to the condenser 230.

The condenser 230 may be an air or water-cooled condenser configured to condense water vapor included in the fuel exhaust and output recycled fuel (e.g., dewatered hydrogen). The condenser 230 may also output liquid water condensed from the fuel exhaust.

In some embodiments, a heat exchanger 350 may be configured to extract heat from the anode exhaust in the first recycling conduit 222. The heat exchanger may lower the temperature of the anode exhaust, which may facilitate the condensation of water in the condenser 230.

The recycle blower 232 may be a blower or compressor configured to pressurize the recycled fuel in the second recycling conduit 224. In some embodiments, the recycled fuel may be pressurized to approximately the same pressure as the fresh fuel provided to the fuel supply conduit 240 from a fuel source 30, such as a hydrogen (H₂) supply conduit, tank, or generator (e.g., electrolyzer or chemical reaction hydrogen generator). For example, the recycle blower 232 may output recycled fuel at a pressure ranging from about 0.5 to 5 pounds per square inch gauge (psig), such as from about 1 to about 2 psig.

The fuel supply conduit 240 may be configured to receive fresh fuel, such as hydrogen supplied from the fuel source 30. The fuel supply conduit 240 may also receive the recycled fuel from the second recycling conduit 224. The fuel supply conduit may supply the fresh fuel, the recycled fuel, or a mixture of both to the second fuel supply conduit 242. The second fuel supply conduit 242 may be configured to selectively supply fuel received from the fuel supply conduit 240 to one or more of the fuel inlets 102, 152A, 152B of each power module 10.

The power system 200 may also include one or more gas meters (e.g., flow meters and/or gas composition sensors) 260, pressure sensors 262, flow control valves 264, gas flow regulators 266, and/or non-return valves, to control fluid flow to and from the power modules 10. In particular, the power system 200 may include a first gas meter 260 configured to measure gas flow from the hydrogen source 30, and a first pressure sensor 262 configured to detect gas pressure in the fuel supply conduit 240. The power system 200 may also include a second gas meter 260 configured to measure gas flow in the second recycling conduit 224, and a second pressure sensor 262 configured to detect gas pressure in the second recycling conduit 224. The flow control valve(s) 264 may be mass flow controller (MFC) valves, proportional solenoid valves, or the like, for example. The gas flow regulators 266 may be mass flow controllers (MFCs) or the like.

In various embodiments, the power system 200 may further comprise the above described system controller 225 configured to control various elements of the power system 200. The controller 225 may include a central processing unit configured to execute stored instructions. For example, the controller 225 may be configured to control the valves 264, gas regulators 266, and/or the recycle blower 232, in order to control the flow of fuel through the power system 200.

In some embodiments, the condenser 230, recycle blower 232, and any corresponding gas meters 260, regulators 266, and/or pressure sensors 262 may be arranged as a recycling module 16 and disposed in a separate cabinet, enclosure, room or structure from the modular housing 210. In other embodiments, the recycling module 16 may be disposed as a separate module within the system enclosure 210, or the recycling module 16 may be included in place of or within the fuel processing module 14. In various embodiments, the multiple system enclosures 210 may be connected to the same recycling module 16.

In various embodiments, anode exhaust coolers, mass flow controllers to control fuel flow, and/or fuel exhaust blowers to control fuel exhaust flow, may be omitted from the power modules 10. The fuel processing modules 14 may also be omitted from the power modules, in some embodiments. Accordingly, overall system costs may be reduced by utilizing one condenser 230 and one recycle blower 232 to process the fuel exhaust from the power modules 10.

The utilization of the condenser 230 and the recycle blower 232 may increase system efficiency and provide fuel utilization rates of about 100%. For example, during steady-state mode operation, nearly 100% of the hydrogen in the fuel exhaust may be recycled, and no hydrogen is consumed by the startup heater 150, since fuel flow to the startup heater 150 is cut off after system start-up mode operation during which fuel flow is provided to the start-up heater through the ignition fuel inlet 152A. In case the temperature of the fuel cell stacks 102 is determined to be lower than a desired threshold, then fuel may be temporarily provided to the heater 150 through the heating fuel inlet 152B during the steady-state mode operation. The fuel in the heater 150 is oxidized by the stack air exhaust to generate heat which heats the fuel cell stacks 102 to a desired temperature.

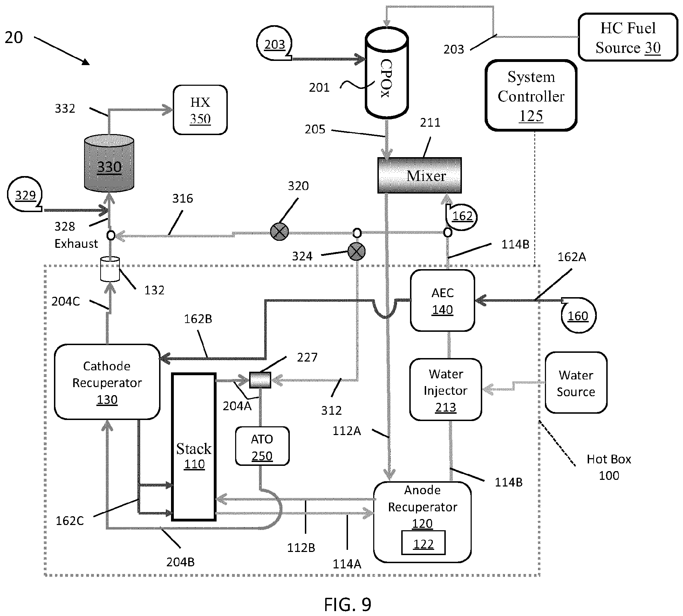

FIG. 9 is a schematic of a fuel cell system 20 configured for hydrocarbon fuel operation, according to various embodiments of the present disclosure. The fuel cell system 20 and the power system 300 may be similar to the fuel cell system 10 and the power system 200. As such, only the differences therebetween will be discussed in detail.

Referring to FIG. 9, the fuel cell system 20 may include a catalytic partial oxidation (CPOx) reactor 201, CPOx blower 203 (e.g., air blower), an anode exhaust recycle blower 162, a mixer 211, a water injector 213, a vortex generator 227, an anode tail gas oxidizer (ATO) 250, an ATO conduit 312, a bypass conduit 316, a bypass valve 320, an ATO valve 324, and exhaust manifold 328, an exhaust blower 329, and an exhaust oxidizer 330. The CPOx reactor 201 may be configured to partially oxidize a hydrocarbon fuel, such as syngas, natural gas, propane, etc., received from the fuel source 30 via a fuel inlet conduit or manifold 203, using oxygen provided by the CPOx blower 203. The partially oxidized fuel output from the CPOx reactor 201 may be provided to the mixer 211 by fuel conduit 205. The partially oxidized fuel may be mixed with anode exhaust provided to the mixer 211 from the anode exhaust cooler 140.

A fuel mixture output from the mixer 211 may be provided to the anode recuperator 120 by fuel conduit 112A. The anode recuperator 120 may include one or more reformation catalysts 122 configured to reform the fuel mixture. The water injector 213 may inject water received from a water source into the anode exhaust output from the anode recuperator 120 and provided to the anode exhaust cooler 140.

Anode exhaust conduit 114B may be fluidly connected to exhaust conduit/manifold 328 via bypass conduit 316. The bypass conduit 316 may be fluidly connected to the vortex generator 227 by ATO conduit 312. The bypass valve 320 may control anode exhaust flow through the bypass conduit 316, and the ATO valve 324 may control anode exhaust flow through ATO conduit 312. A portion of the anode exhaust may be diverted from anode exhaust conduit 114B into bypass conduit 316.

During system startup, anode exhaust may be provided from the bypass conduit to the vortex generator 227, via ATO conduit 312, by closing the bypass valve 320 and opening the ATO valve 324. The vortex generator 227 may be configured to mix cathode exhaust output from the stack 110 with the anode exhaust. An exhaust mixture output from the vortex generator 227 may be oxidized in the ATO 250 and provided to the cathode recuperator 130, via exhaust conduit 204B. For example, the ATO 250 may be configured to oxidize byproducts produced in the stack 110, such as carbon monoxide and the like.

During steady-state operation, a portion of the anode exhaust may be provided to the exhaust manifold 328 and mixed with cathode exhaust provided from the cathode recuperator 130. The resulting mixture may be provided to the exhaust oxidizer 330 located outside the hotbox 100 via the exhaust manifold 328. The exhaust blower 329 may provide air to the exhaust oxidizer to facilitate exhaust oxidation. Hot exhaust generated in the exhaust oxidizer may be output to the heat exchanger 350 via exhaust conduit 332.

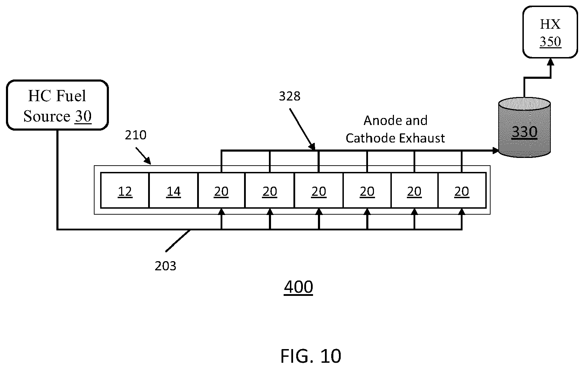

FIG. 10 is a schematic of a power system 400 including multiple fuel cell systems 20, according to various embodiments of the present disclosure. As shown in FIG. 10, the power system 400 may include multiple fuel cell systems 20 disposed in a system enclosure 210. Cathode and anode exhaust output from the fuel cell systems 20 may be provided to the exhaust oxidizer 330 by the exhaust manifold 328. Hot oxidized exhaust output from the exhaust oxidizer 330 may be provided to the heat exchanger 350 via exhaust conduit 332.

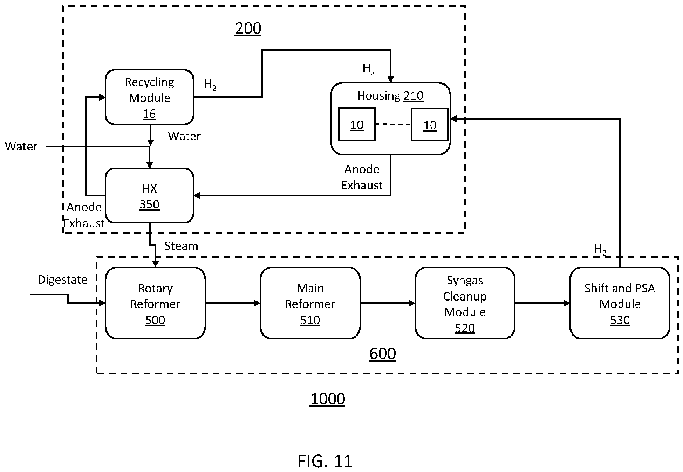

FIG. 11 is a schematic of a fuel processing system 1000, according to various embodiments of the present disclosure. Referring to FIG. 11, The fuel processing system 1000 may include the power system 200 and a digestion system 600. The digestion system 600 may include a rotary reformer 500, a main reformer 510, a syngas cleanup module 520, and a water-gas-shift and pressure-swing adsorption module 530, as described above with respect to any one or more of FIGS. 1 to 6. The power system 200, as shown in FIGS. 7 and 8, may include power modules 10 disposed in a system enclosure 210, a recycling module 16, and a heat exchanger 350.

The power system 200 may operate using hydrogen output from module 530. Power generated by the power system 200 may be provided to operate other elements of the system 1000, such as the rotary reformer 500 (e.g., power used to rotate the reformer 500) and/or main reformer 510.

Heat generated by the power system 200 may be used to heat pressurized water or a hot oil system, to displace some of the electrical power used to heat the rotary reformer 500 and/or the main reformer. For example, the heat exchanger 350 may be configured to heat water and/or steam provided to the rotary reformer 500. For example, the heat exchanger 350 may generate steam by extracting heat from anode exhaust output from the power modules 10. In some embodiments, the heat exchanger 350 may include a pressurized water or hot oil heat exchange system. For example, the heat exchanger 350 may include a hot liquid filled screw conveyor, a screw conveyor that extends through a hot liquid-filled annulus, or a grid of heat pipes, similar to a shell and tube heat exchanger, where the water is fed or falls over/through tubes heated by the fuel cell stack 102 anode exhaust. Alternatively, the first few electrical wraps around the rotary reformer 500 may be replaced with hot oil/pressurized water wraps that are heated by the fuel cell stack 102 anode exhaust.

In some embodiments, water condensed from the anode exhaust in the recycling module 16 may optionally be used to supplement water requirements of other elements of the system 1000. For example, the condensed water optionally be mixed with additional water from a water source, and then the mixed water may be provided into the heat exchanger 350 to be converted to steam and then provided into the rotary reformer 500.

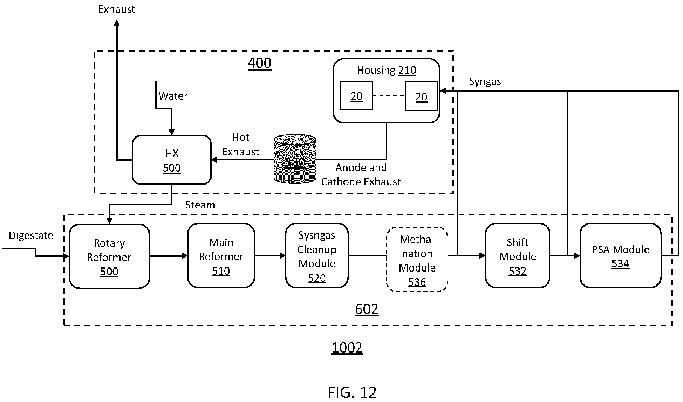

FIG. 12 is a schematic of a fuel processing system 1002, according to various embodiments of the present disclosure. Referring to FIG. 12, The fuel processing system 1002 may include the above described power system 400 and a digestion system 602. The digestion system 602 may include a rotary reformer 500, a main reformer 510, a syngas cleanup module 520, and a water-gas-shift module 532, and a pressure-swing adsorption (PSA) module 534, as described above with respect to any one or more of FIGS. 1 to 6. The power system 400, as shown in FIGS. 9 and 10, may include power modules 20 disposed in a system enclosure 210, an exhaust oxidizer 330, and a heat exchanger 350.

The power system 400 may receive syngas output from the cleanup module 520, the shift module 532, and/or the PSA module 534. In some embodiments, the syngas may be blended with additional fuel, such as natural gas provided by a utility, if desired.

In various embodiments, the fuel cell stack 102 anode exhaust may optionally be separated into a water product, which may be used as makeup water in the rotary reformer 500 and/or the main reformer 510, a CO₂ product for sequestration or use as a salable product (e.g., beverage carbonation), and/or a syngas product (e.g., CO, H₂, CO₂, and/or N₂). The syngas product may be provided to the rotary reformer 500, the main reformer 510, the cleanup module 520, the shift module 532, or the PSA module 534. In other embodiments, the shift module 532 and the PSA module 534 may be replaced with a Fischer-Tropsch process module described above, and the syngas product may be provided thereto.

In some embodiments, the digester 602 may optionally include a methanation module 536 configured to convert some of the syngas into methane. The methanation module may include a suitable catalyst for conversion of syngas to methane. For example, the methanation module 536 may be disposed upstream of the water-gas-shift module 532 and downstream of the syngas cleanup module 520. The methanation module 536 may be used to increase a methane concentration in a fuel feed to the power system 400. Thus, the fuel feed provided to the power system 400 may be provided downstream of the methanation module 536.

System integration, as discussed above, could be performed using landfill gas, assuming that the produced syngas and/or produced hydrogen can be sulfur free/siloxane free/free of other detrimental species. System integration could also be performed with respect to using stranded/orphan natural gas wells. For example, the digester may be used to reduce the amount of higher hydrocarbons in a power system fuel feed.

For all systems that have a net production of hydrogen, a hydrogen product may be liquified to reduce transportation costs, if a hydrogen pipeline is not available.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

## Claims

1. A system, comprising:
a digestion system configured to convert a digestate into a fuel gas; and
a fuel cell power system configured to convert the fuel gas into power and heat, and to provide the heat to the digestion system.

2. The system of claim 1, wherein the fuel gas comprises hydrogen (H₂).

3. The system of claim 2, wherein the fuel cell power system comprises:
fuel cells;
a condenser configured to remove water from fuel exhaust output from the fuel cells to generate recycled fuel;
a recycling conduit configured to receive the fuel exhaust from the fuel cells and transfer the fuel exhaust to the condenser; and
a recycle blower configured to pressurize the recycled fuel output from the condenser.

4. The system of claim 3, wherein the fuel cell power system further comprises a heat exchanger configured to transfer heat from the fuel exhaust to a fluid provided to the digestion system.

5. The system of claim 4, wherein the fluid comprises pressurized water or oil.

6. The system of claim 4, wherein the digestion system comprises at least one reformer, and wherein the fluid is configured to heat the at least one reformer.

7. The system of claim 6, wherein the digestion system further comprises a syngas cleanup module and a water-gas-shift module.

8. The system of claim 7, wherein the digestion system further comprises a pressure-swing adsorption module.

9. A method, comprising:
converting a digestate into a fuel gas;
providing the digestate to a fuel cell power system;
converting the fuel gas into power and heat in the fuel cell power system; and
providing the heat from the fuel cell power system to the digestion system.

10. The method of claim 9, wherein the fuel gas comprises hydrogen (H₂), and the fuel cell power system comprises fuel cells.

11. The method of claim 9, further comprising:
removing water from fuel exhaust output from the fuel cells to generate recycled fuel; and
pressurizing the recycled fuel.

12. The system of claim 11, further comprising transferring heat from the fuel exhaust to a fluid provided to the digestion system.

13. The method of claim 12, wherein the fluid comprises pressurized water or oil.

14. The method of claim 12, wherein the digestion system comprises at least one reformer, and wherein the fluid heats the at least one reformer.

15. The method of claim 12, wherein the digestion system further comprises a syngas cleanup module, a water-gas-shift module, and a pressure-swing adsorption module.
